# EUROPEAN PATENT APPLICATION

(11) **EP 4 207 477 A1**
(43) Date of publication of application: **05.07.2023**
(21) Application number: 22827421.3
(22) Date of filing: 13.06.2022
(51) Int. Cl.: H01M 50/528

(54) **ELECTROCHEMICAL DEVICE AND ELECTRONIC DEVICE**

(30) Priority: 23.06.2021 CN 202110698548
(71) Applicant: DONGGUAN POWERAMP TECHNOLOGY LIMITED, Dongguan, Guangdong 523000 (CN)
(72) Inventor: SUN, Jianzheng, Dongguan, Guangdong 523000 (CN); LI, Xiaochen, Dongguan, Guangdong 523000 (CN)
(74) Representative: Klunker IP Patentanwälte PartG mbB
(86) International application number: PCT/CN2022/098472
(87) International publication number: WO 2022/267925

(57) **Abstract**

An electrochemical apparatus includes a housing, an electrode assembly disposed inside the housing, a first tab group, and a first adapting piece electrically connected to the first tab group and extending out from the housing. The electrode assembly is configured to be a winding structure including a first electrode plate. The first tab group includes M first tabs connected to the first electrode plate. A thickness direction of the electrode assembly is defined as a first direction. In the first direction, the electrode assembly includes N layers of the first electrode plate, N being greater than M. The M first tabs are each connected to the first electrode plate. A plane passing through a winding center axis of the electrode assembly and perpendicular to the first direction is defined as a winding center plane. The M first tabs are disposed on two sides of the winding center plane. The first tab group includes a first connecting portion connected to the first adapting piece and a second connecting portion connected to the first electrode plate. Part of the first tabs at the second connecting portion are connected to a side of the first connecting portion facing the electrode assembly. This application further provides an electronic apparatus. This application improves both high-rate charge-discharge performance and safety performance.

## Description

### TECHNICAL FIELD

This application relates to the field of energy storage technologies, and in particular, to an electrochemical apparatus and an electronic apparatus including such electrochemical apparatus.

### BACKGROUND

With the popularity of consumer electronic products such as notebook computers, mobile phones, handheld game consoles, tablet computers, mobile power supplies, drones and electric cars, requirements for electrochemical apparatuses (for example, lithium-ion batteries) are increasingly stringent. However, it is hard for an electrochemical apparatus to have both good high-rate charge-discharge performance and good safety performance.

### SUMMARY

In view of the deficiency in the prior art, it is necessary to propose an electrochemical apparatus.

It is also necessary to provide an electronic apparatus including such electrochemical apparatus.

This application provides an electrochemical apparatus, including a housing, an electrode assembly disposed inside the housing, a first tab group, and an adapting piece electrically connected to the first tab group and extending out of the housing. The electrode assembly is configured to be a winding structure and includes a first electrode plate. The first tab group includes M first tabs, and the first tabs are connected to the electrode plate. A thickness direction of the electrode assembly is defined as a first direction. In the first direction, the electrode assembly includes N layers of the first electrode plate, N being greater than M. The M first tabs are each connected to the first electrode plate. A plane passing through a winding center axis of the electrode assembly and perpendicular to the first direction is defined as a winding center plane. In the first direction, the M first tabs are disposed on two sides of the winding center plane. The first tab group includes a first connecting portion connected to the first adapting piece and a second connecting portion connected to the first electrode plate, where the M first tabs are stacked to form the first connecting portion. Part of the first tabs at the second connecting portion are connected to a side of the first connecting portion facing the electrode assembly.

In this application, the number M of first tabs is set to be smaller than the layer number N of the first electrode plate, helping reduce difficulties of tab bending and welding, thereby simplifying a manufacturing process. In addition, the M first tabs are connected to M layers in the N layers of the first electrode plate respectively, and on the basis that the first tabs are disposed on the two sides of the winding center plane, the number M of first tabs may be changed as required. Therefore, internal resistance of the electrode plate may be adjusted to make the electrochemical apparatus meet the requirements of different charge-discharge rates. Furthermore, because part of the first tabs at the second connecting portion are connected to the side of the first connecting portion facing the electrode assembly, owing to a limiting function of that part of first tabs, the first connecting portion has a more stable position and is not apt to insert inversely into the electrode assembly. Therefore, contact short circuit due to a tab being inversely inserted may be alleviated, improving safety of the electrochemical apparatus.

In some possible embodiments, in the first direction, layers of the first electrode plate connected to the first tabs and layers of the first electrode plate not connected to any of the first tabs are alternately arranged. Compared with the electrochemical apparatus with one side of the winding center plane provided with a tab structure, the first electrode plate being alternately provided with the first tab makes part of the first tabs disposed on the side of the first connecting portion facing the electrode assembly, and because of the limiting function of that part of first tabs, risks of contact short circuit due to the first connecting portion being inversely inserted are reduced and safety is improved. Also, because the number of first tabs is the same as the number of first tabs of an electrochemical apparatus with tab structures disposed on one side of its winding center plane, the number of first tabs added to ensure safety is reduced, where the additional first tabs cause difficulties in tab bending and welding in the manufacturing process.

In some possible embodiments, the first connecting portion forms a U-shaped structure. The first connecting portion includes a first sub-portion, a second sub-portion, and a third sub-portion. The first sub-portion is connected to the first adapting piece, the second sub-portion is connected to the second connecting portion, and the third sub-portion is bent and connected between the first sub-portion and the second sub-portion. The first adapting piece is at least partly disposed inside a space delimited by the U-shaped structure.

In some possible embodiments, in the first direction, in the N layers of the first electrode plate, one outermost layer of the first electrode plate is connected to one of the first tabs, and another outermost layer of the first electrode plate is not connected to any of the first tabs.

In some possible embodiments, the electrochemical apparatus further includes a first bonding piece and a second bonding piece. The first bonding piece is bonded to a side of the first sub-portion facing opposite to the electrode assembly. The second bonding piece is bonded to a side of the second sub-portion facing opposite to the electrode assembly and to a side surface of the electrode assembly in the first direction. In the first direction, the first bonding piece is further disposed between two adjacent layers of the first electrode plate, and the second connecting portion is located between the first bonding piece and the second bonding piece. The first bonding piece and the second bonding piece may reduce risks of short circuit or electrolyte leakage caused by the housing being pierced by burrs and welding marks of the first connecting portion. The first bonding piece includes a bending portion disposed on a side of the second sub-portion facing the electrode assembly. The bending portion also has a limiting function on the first connecting portion, further reducing risks of contact short circuit due to the first connecting portion being inversely inserted.

In some possible embodiments, each layer of the first electrode plate disposed between the first bonding piece and the second bonding piece is connected to a first tab. In this manner, the number of first tabs may be further increased to increase a charge-discharge rate of the electrochemical apparatus.

In some possible embodiments, the M first tabs are welded together to form a welding region at the second sub-portion. The bending portion is disposed on a side of the welding region facing the electrode assembly. Because the M first tabs are fixed at the welding region of the second sub-portion by welding, risks may be reduced that the first connecting portion is inversely inserted because the first tabs at the second sub-portion are separated from each other, further improving safety of the electrochemical apparatus.

In some possible embodiments, in the N layers of the first electrode plate, two outermost layers of the first electrode plate are each connected to a first tab.

In some possible embodiments, the electrochemical apparatus further includes a first bonding piece and a second bonding piece. The first bonding piece is bonded to a side of the first sub-portion facing opposite to the electrode assembly and to a side surface of the electrode assembly in the first direction. The second bonding piece is bonded to the side of the second sub-portion facing opposite to the electrode assembly and to the other side surface of the electrode assembly in the first direction. In the first direction, the second connecting portion is located between the first bonding piece and the second bonding piece. The first bonding piece and the second bonding piece may reduce risks of short circuit or electrolyte leakage caused by the housing being pierced by burrs and welding marks of the first connecting portion.

In some possible embodiments, the M first tabs are welded together to form a welding region at the second sub-portion. Because the M first tabs are fixed at the welding region of the second sub-portion by welding, risks may be reduced that the first connecting portion is inversely inserted because the first tabs at the second sub-portion are separated from each other, further improving safety of the electrochemical apparatus.

In some possible embodiments, at least one of the first bonding piece or the second bonding piece is an insulating tape.

In some possible embodiments, the first electrode plate includes a current collector and an active material layer disposed on a surface of the current collector. The first tab and the current collector are integrally formed.

This application further provides an electronic apparatus including the electrochemical apparatus described above.

### BRIEF DESCRIPTION OF DRAWINGS

FIG. 1 is a front view of an electrochemical apparatus according to an embodiment of this application.
FIG. 2 is a cross-sectional view of the electrochemical apparatus shown in FIG. 1 along line II-II with a housing removed.
FIG. 3 is a cross-sectional view of the electrochemical apparatus shown in FIG. 1 along line III-III with a housing removed.
FIG. 4 is a cross-sectional view of the electrochemical apparatus shown in FIG. 1 along line IV-IV with a housing removed.
FIG. 5A is a top view of the electrochemical apparatus shown in FIG. 1 in some other embodiments with a housing removed.
FIG. 5B is a cross-sectional view of the electrochemical apparatus shown in FIG. 1 in some other embodiments with a housing removed.
FIG. 6 is a cross-sectional view of the electrochemical apparatus shown in FIG. 1 in still some other embodiments with a housing removed.
FIG. 7A is a top view of an electrochemical apparatus according to another embodiment of this application.
FIG. 7B is a cross-sectional view of an electrochemical apparatus according to another embodiment of this application.
FIG. 8 is a cross-sectional view of an electrochemical apparatus according to yet another embodiment of this application.
FIG. 9 is a cross-sectional view of an electronic apparatus according to an embodiment of this application.

### Reference signs of main components:

| | |
|---|---|
| Electronic apparatus | 1 |
| Housing | 10 |
| Body | 11 |
| Sealing edge | 12 |
| Electrode assembly | 20 |
| Side surface | 20a, 20b |
| First electrode plate | 21 |
| Second electrode plate | 22 |
| Separator | 23 |
| First tab group | 30 |
| First tab | 31 |
| Second tab group | 40 |
| Second tab | 41 |
| First adapting piece | 50 |
| Second adapting piece | 60 |
| First bonding piece | 70 |
| Bending portion | 71 |
| Second bonding piece | 80 |
| Electrochemical apparatus | 100, 200, and 300 |
| First section | 201 |
| Second section | 202 |
| First bending section | 203 |
| Second bending section | 204 |
| First current collector | 211 |
| First active material layer | 212 |
| Second current collector | 221 |

| | |
|---|---|
| Second active material layer | 222 |
| First connecting portion | 301 |
| Second connecting portion | 302 |
| First sub-portion | 3011 |
| Second sub-portion | 3012 |
| Third sub-portion | 3013 |
| Welding region | 3014 |
| Space | S |
| Winding direction | D |
| First direction | D₁ |
| Second direction | D₂ |
| Winding center axis | C |
| Winding center plane | P |

This application will be further described with reference to the accompanying drawings in the following specific embodiments.

### DETAILED DESCRIPTION

The technical solutions in the embodiments of this application are clearly described below in detail. Apparently, the described embodiments are some rather than all of the embodiments of this application. Unless otherwise defined, all technical and scientific terms used herein shall have the same meanings as commonly understood by those skilled in the art to which this application belongs. The terms used in the specification of this application are merely intended to describe specific embodiments but not intended to constitute any limitation on this application.

The following describes the embodiments of this application in detail. However, this application may be embodied in many different forms and should not be construed as being limited to the illustrative embodiments set forth herein. Rather, these illustrative embodiments are provided so that this application may be conveyed to those skilled in the art thoroughly and in detail.

In addition, in the accompanying drawings, sizes or thicknesses of various components and layers may be exaggerated for brevity and clarity. Throughout the application, the same numerical values represent the same elements. As used herein, the term "and/or" includes any and all combinations of one or more of the associated listed items. In addition, it should be understood that when an element A is referred to as being "connected to" an element B, the element A may be directly connected the element B or an intermediate element C may be present therebetween such that the element A and the element B are indirectly connected to each other.

Further, the use of "may" in describing embodiments of this application refers to "one or more embodiments of this application".

The terminologies used herein are merely intended to describe specific embodiments but not intended to constitute any limitation on this application. As used herein, the singular forms are intended to include the plural forms as well, unless the context clearly indicates otherwise. It should be further understood that the terms "comprise" or "include" and variations thereof, when used in this specification, specify the presence of stated features, numbers, steps, operations, elements, and/or components but do not preclude the presence or addition of one or more other features, numbers, steps, operations, elements, components, and/or combinations thereof.

Spatial relation terms such as "above" may be used herein for ease of description to describe the relation between one element or feature and another element (multiple elements) or feature (multiple features) as illustrated in the drawings. It should be understood that spatial relation terms are intended to encompass different orientations of a device or an apparatus in use or operation in addition to the orientations depicted in the drawings. For example, if the device in the drawings is turned over, elements described as being "above" or "over" other elements or features would then be oriented "below" or "beneath" the other elements or features. Thus, the example term "above" may encompass both orientations of being above and below. It should be understood that although the terms first, second, third, or so on may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, a first element, component, region, layer, or portion discussed below may be referred to as a second element, component, region, layer, or portion without departing from the teachings of the illustrative embodiments.

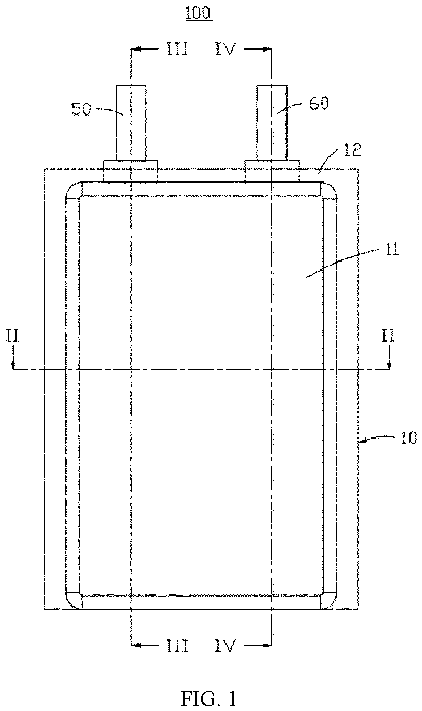

Referring to FIG. 1 to FIG. 3, an embodiment of this application provides an electrochemical apparatus 100, including a housing 10, an electrode assembly 20, a first tab group 30, a second tab group 40, a first adapting piece 50, and a second adapting piece 60. The electrode assembly 20, the first tab group 30, and the second tab group 40 are disposed inside the housing 10.

As shown in FIG. 1, in some embodiments, the housing 10 may be a packing bag obtained through packaging using package film (for example, aluminum-plastic film), which means that the electrochemical apparatus 100 is a pouch cell. The housing 10 includes a body 11 for accommodating the electrode assembly 20 and a sealing edge 12 connected to the body 11. In some other embodiments, the electrochemical apparatus 100 is not limited to a pouch cell, but may alternatively be a steel-shell cell or an aluminum-shell cell, which is not limited in this application.

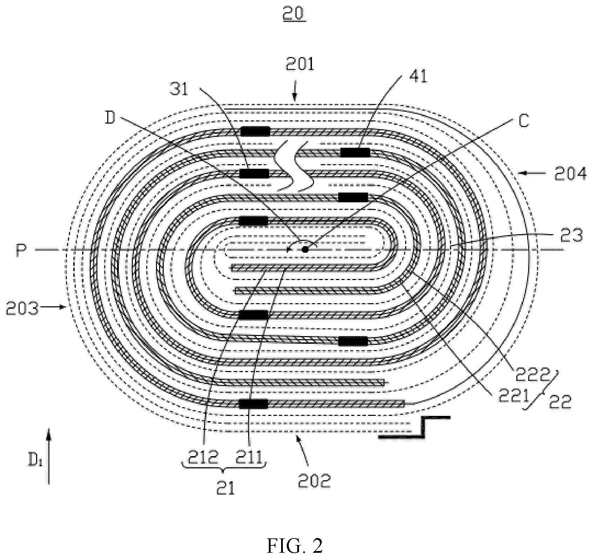

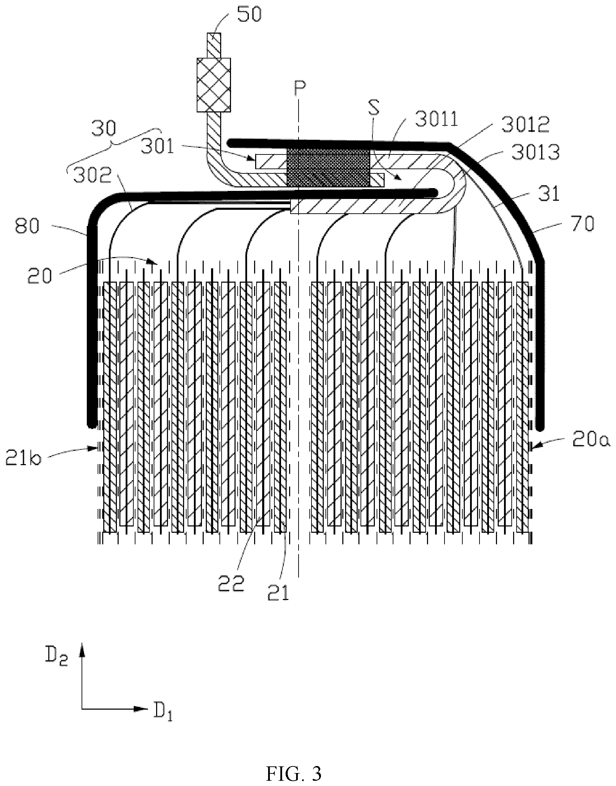

As shown in FIG. 2 and FIG. 3, the electrode assembly 20 includes a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, thereby reducing risks of short circuit of the electrode assembly 20. As shown in FIG. 2, the electrode assembly 20 is configured to be a winding structure, that is, the first electrode plate 21, the separator 23, and the second electrode plate 22 are stacked in order with the stack wound to form the electrode assembly 20. The electrode assembly 20 has a winding center axis C perpendicular to the plane of paper. The winding direction D is a direction of rotating counterclockwise around the winding center axis C as shown in FIG. 2.

The first electrode plate 21 includes a first current collector 211 and a first active material layer 212 disposed on the first current collector 211. The second electrode plate 22 includes a second current collector 221 and a second active material layer 222 disposed on the second current collector 221. In some embodiments, the first electrode plate 21 may be a negative electrode plate, and the second electrode plate 22 may be a positive electrode plate. The first current collector 211 may be, but is not limited to, a metal foil such as a copper foil or a nickel foil. The second current collector 221 may be, but is not limited to, a metal foil such as an aluminum foil or a nickel foil. In some other embodiments, the first electrode plate may be a positive electrode plate, and the second electrode plate 22 may be a negative electrode plate.

The first tab group 30 includes M first tabs 31 (M is a natural number greater than 1), where the M first tabs 31 are connected to the first electrode plate 21. Specifically, the M first tabs 31 are all connected to the first current collector 211 of the first electrode plate 21. More specifically, the plurality of first tabs 31 may be integrally formed with the first current collector 211 (which means the first tabs 31 are formed by cutting the first current collector 211). The first adapting piece 50 is electrically connected to the first tab group 30 and extends out of the housing 10 at the sealing edge 12 to connect an external component (not shown in the figure). The electrode assembly 20 further has a first direction D1 and a second direction D2. The first direction D1 is a thickness direction of the electrode assembly 20. The second direction D2 is a direction of the first tab 31 extending out of the first electrode plate 21. For example, the second direction D2 may be a length direction of the electrode assembly 20.

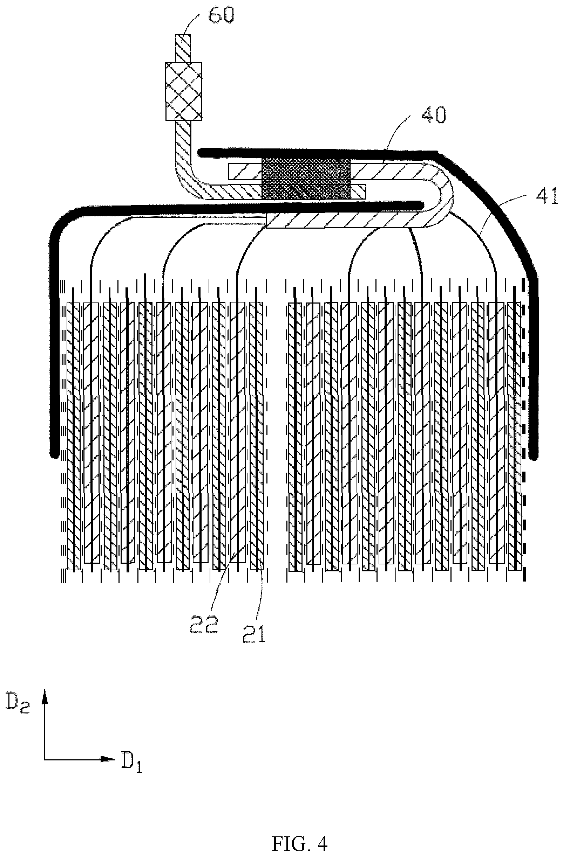

As shown in FIG. 2 and FIG. 4, the second tab group 40 includes a plurality of second tabs 41, and the second tabs 41 and the first tabs 31 have opposite polarities. The plurality of second tabs 41 are connected to the second electrode plate 22. Specifically, the plurality of second tabs 41 are connected to the second current collector 221 of the second electrode plate 22. More specifically, the plurality of second tabs 41 may be integrally formed with the second current collector 221. The second adapting piece 60 is electrically connected to the second tab group 40 and extends out of the housing 10 at the sealing edge 12 to connect an external component.

As shown in FIG. 2 and FIG. 3, in the first direction D1, one layer of the first current collector 211 and the first active material layer 212 disposed on the surface of the first current collector 211 are defined as one layer of the first electrode plate 21. Then, the electrode assembly 20 includes N layers of the first electrode plate 21 (N is a natural number greater than 1), N being greater than M. For simplicity, FIG. 2 and FIG. 3 may only illustratively show partial layers of the first electrode plate 21 in the electrode assembly 20 while the other layers of the first electrode plate 21 are omitted. Therefore, it can be understood that the actual number of layers of the first electrode plate 21 is not limited to that shown in drawings. Similarly, the layer number of the second electrode plate 22 is also not limited to that shown in the drawings. The M first tabs 31 are connected each to the first electrode plate 21. In other words, the M first tabs 31 are connected to M layers in N layers of the first electrode plate 21 respectively, and in the N layers of the first electrode plate 21, the other (N minus M) layers of the first electrode plate 21 are not connected to any of the first tabs 31. A plane passing through the winding center axis C of the electrode assembly 20 and perpendicular to the first direction D1 is defined as a winding center plane P. In the first direction D1, the M first tabs 31 are disposed on two sides of the winding center plane P.

Specifically, as shown in FIG. 2, in the winding direction D, the electrode assembly 20 includes a first section 201, a first bending section 203, a second section 202, and a second bending section 204 that are connected in sequence. In some embodiments, the first section 201 and the second section 202 may be flat and straight sections arranged in parallel. In some other embodiments, the first section 201 and the second section 202 may alternatively be bending sections. This is not limited in this application. The winding center plane P is located between the first section 201 and the second section 202. Therefore, the M first tabs 31 being disposed on the two sides of the winding center plane P means that part of the M first tabs 31 are connected to the first electrode plate 21 at the first section 201, and the other part of the M first tabs 31 are connected to the first electrode plate 21 at the second section 202.

More specifically, when N/2<M<N, the M first tabs 31 may be distributed arbitrarily on the two sides of the winding center plane P. When 2≤M≤N/2, the number of first tabs 31 located on one side of the winding center plane P is greater than or equal to 1, and the number of first tabs 31 located on the other side of the winding center plane P is greater than or equal to 1.

As shown in FIG. 3, the first tab group 30 includes a first connecting portion 301 and a second connecting portion 302. The first connecting portion 301 is connected to the first adapting piece 50, and the second connecting portion 302 is connected between the first electrode plate 21 and the first connecting portion 301. The M first tabs 31 are stacked to form the first connecting portion 301. In some embodiments, at least two of the M first tabs 31 are stacked in mutual contact, and may be regarded as a part of the first connecting portion 301. Part of the first tabs 31 at the second connecting portion 302 are connected to a side of the first connecting portion 301 facing the electrode assembly 20.

A structure of the second tab group 40 may be similar to that of the first tab group 30, and therefore is not further described.

Straight-out tabs take up space at the head of the electrode assembly, reducing energy density of the electrochemical apparatus. Therefore, before being welded to the adapting piece, the tabs need to be bent. For an electrochemical apparatus having a half tab structure (each turn of the electrode plate is connected to only one tab; for example, only the first electrode plate at the first section of the electrochemical apparatus is connected to first tabs), when an adapting piece is required to be inserted into the housing to a preset position so as to be welded to a bent tab, the bent tab is apt to inversely insert towards the electrode assembly and into the electrode assembly under the action of the adapting piece, causing short circuit and even smoke and fire during subsequent use, thereby degrading use safety of the electrochemical apparatus. An electrochemical apparatus having a full tab structure (each layer of the electrode plate is connected to one tab) helps increase the charge-discharge rate, but also increases difficulties of tab bending and welding, making a manufacturing process more costly.

In this application, one turn means a turn of the electrode assembly 20 along the winding direction D starting from a point thereof as a starting end and reaching another point as a terminating end, where the terminating end, the starting end, and the center of the turn are in one straight line and the starting end is located between the terminating end and the center of the turn. One turn forms two layers, which means one turn of the first electrode plate 21 includes two layers of the first electrode plate 21.

In this application, the number M of first tabs 31 is set to be smaller than the layer number N of the first electrode plate 21, helping reduce difficulties of tab bending and welding, thereby simplifying a manufacturing process. In addition, the M first tabs 31 are connected to M layers in the N layers of the first electrode plate 21 respectively, where on the basis that the first tabs 31 are disposed on the two sides of the winding center plane P, the number M of first tabs 31 may be changed as required. Therefore, internal resistance of the electrode plate may be adjusted to make the electrochemical apparatus 100 meet the requirements of different charge-discharge rates. Furthermore, because part of the first tabs 31 at the second connecting portion 302 are connected to the side of the first connecting portion 301 facing the electrode assembly 20, owing to a limiting function of that part of first tabs 31, the first connecting portion 301 has a more stable position in the second direction D2 and is not apt to inversely insert under the action of the first adapting piece 50 when the first adapting piece 50 is inserted into the housing 10. Therefore, contact short circuit due to a tab being inversely inserted may be alleviated, improving safety of the electrochemical apparatus 100. Furthermore, an insulating adhesive layer in the prior art disposed for preventing inversely inserted tabs from contacting an end surface of the electrode assembly may be saved to decrease the cost.

As shown in FIG. 3, in some embodiments, the first connecting portion 301 forms a U-shaped structure. The first portion 301 includes a first sub-portion 3011, a second sub-portion 3012 opposite to the first sub-portion 3011, and a third sub-portion 3013 bent and connected between the first sub-portion 3011 and the second sub-portion 3012. The first connecting portion 3011 is connected to the first adapting piece 50, and the second connecting portion 3012 is connected to the second connecting portion 302. The first connecting portion 301 delimits a space S with an opening facing the first adapting piece 50. The first adapting piece 50 is at least partly disposed inside the space S delimited by the U-shaped structure, and may be fixed to the first sub-portion 3011 by welding.

As shown in FIG. 3, furthermore, in some embodiments, in the first direction D1, layers of the first electrode plate 21 connected to the first tabs 31 and layers of the first electrode plate 21 not connected to any of the first tabs 31 are alternately arranged. In other words, the number M of first tabs 31 is N/2 rounded to the nearest whole number, where the number of first tabs 31 is substantially the same as the number of first tabs of an electrochemical apparatus having a half tab structure. Compared with an electrochemical apparatus having a half tab structure, N layers of the first electrode plate 21 being alternatively provided with a first tab 31 makes part of the first tabs 31 disposed on the side of the first connecting portion 301 facing the electrode assembly 20, and owing to the limiting function of that part of first tabs 31, risks of contact short circuit due to the first connecting portion 301 being inversely inserted are reduced and safety is improved. Also, because the number of first tabs 31 is the same as the number of first tabs of an electrochemical apparatus having a half tab structure, the number of first tabs 31 added to ensure safety is reduced, where the additional first tabs cause difficulties in tab bending and welding in the manufacturing process.

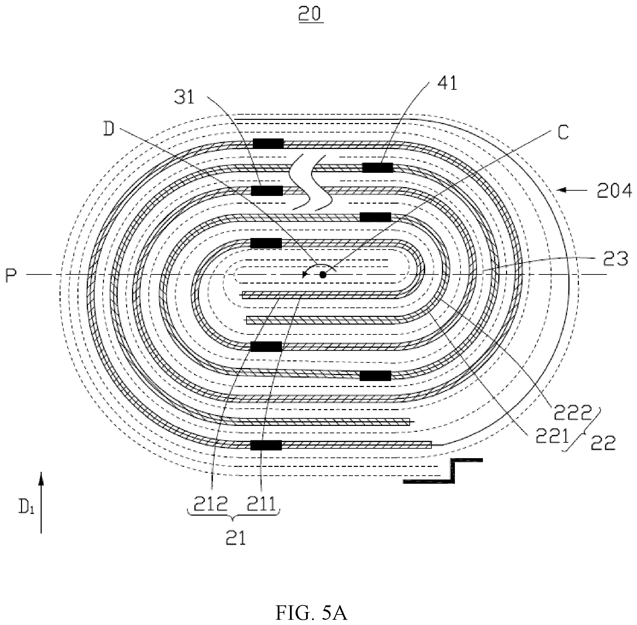

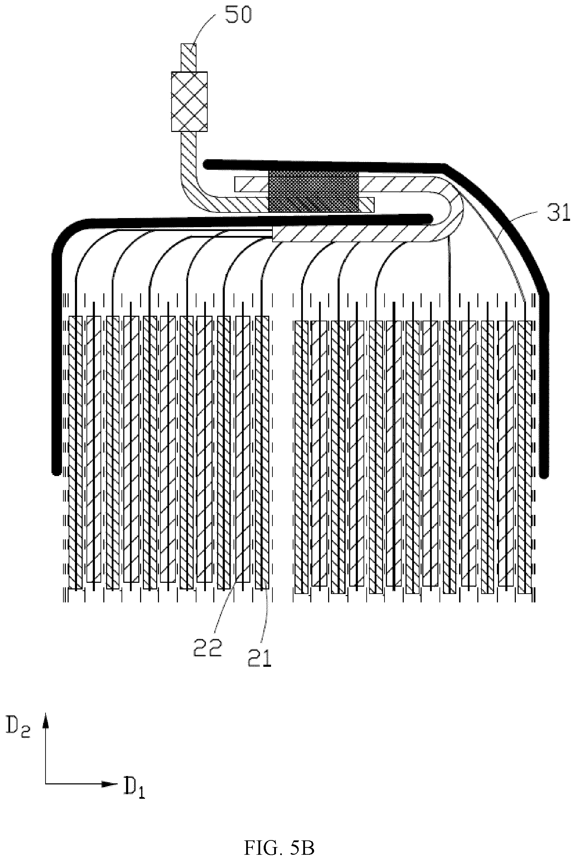

Referring to FIG. 5A and FIG. 5B, in some other embodiments, the number M of first tabs 31 is greater than N/2, where the first tabs 31 may be connected to any M layers in the N layers of the electrode plate 21. In other words, the number M of first tabs 31 may be increased as required. Therefore, compared with the case that layers of the first electrode plate 21 connected to the first tabs 31 and layers of the first electrode plate 21 not connected to any of the first tabs 31 are alternately arranged, this may further reduce internal resistance of the first electrode plate 21, increasing the charge-discharge rate of the electrochemical apparatus 100.

As shown in FIG. 3, in some embodiments, in the N layers of the first electrode plate 21, the two outermost layers of the first electrode plate 21 are each connected to a first tab 31. The electrochemical apparatus 100 further includes a first bonding piece 70 and a second bonding piece 80. The first bonding piece 70 is bonded to a side of the first sub-portion 3011 facing opposite to the electrode assembly 20 and to a side surface 20a of the electrode assembly 20 in the first direction D1. In some embodiments, the side surface 20a of the electrode assembly 20 may be the first electrode plate 21, or the separator 23, or another bonding piece (not shown in the figure). The second bonding piece 80 is bonded to a side of the second sub-portion 3012 facing opposite to the electrode assembly 20 and to the other side surface 20b of the electrode assembly 20 in the first direction D1. In some embodiments, the side surface 20b of the electrode assembly 20 may be the first electrode plate 21, or the separator 23, or another bonding piece (not shown in the figure). In the first direction D1, the second connecting portion 302 is located between the first bonding piece 70 and the second bonding piece 80. It can be understood that burrs may be produced when the first current collector 211 is cut to form the first tabs 31, and welding marks may also be produced when the first connecting portion 301 and the first adapting piece 50 are welded. The foregoing burrs and welding marks may pierce the housing 10, leading to short circuit or electrolyte leakage. Providing the first bonding piece 70 and the second bonding piece 80 may reduce risks of short circuit or electrolyte leakage caused by the housing 10 being pierced by burrs or welding marks of the first connecting portion 301. The first bonding piece 70 and/or the second bonding piece 80 may be an insulating tape.

Further, in some embodiments, in the first direction D1, width of the first bonding piece 70 is greater than that of the first connecting portion 301. In some embodiments, a difference in width between the first bonding piece 70 and the first connecting portion 301 is 1 mm to 50 mm. Further, in some embodiments, in the first direction D1, width of the second bonding piece 80 is greater than that of the first connecting portion 301. In some embodiments, a difference in width between the second bonding piece 80 and the first connecting portion 301 is 1 mm to 50 mm. In some embodiments, in the second direction D2, length of the first bonding piece 70 bonded to the side surface 20a of the electrode assembly 20 is not less than 1 mm, making the first bonding piece 70 stably bonded to the electrode assembly 20. In some embodiments, in the second direction D2, length of the second bonding piece 80 bonded to the side surface 20b of the electrode assembly 20 is not less than 1 mm, making the second bonding piece 80 stably bonded to the first electrode plate 21. In some embodiments, in the second direction D2, length of the first bonding piece 70 beyond an edge of the electrode assembly 20 is not less than 2 mm, making the first bonding piece 70 stably bonded to the first connecting portion 301. In some embodiments, in the second direction D2, length of the second bonding piece 80 beyond the edge of the electrode assembly 20 is not less than 2 mm, making the first bonding piece 80 stably bonded to the first connecting portion 301. It can be understood that to fully decrease direct contact between the first electrode plate 21 and the second electrode plate 22, in the second direction D2, an edge of the separator 23 exceeds edges of the first electrode plate 21 and the second electrode plate 22. Therefore, in the second direction D2, the edge of the electrode assembly 20 is typically the edge of the separator 23.

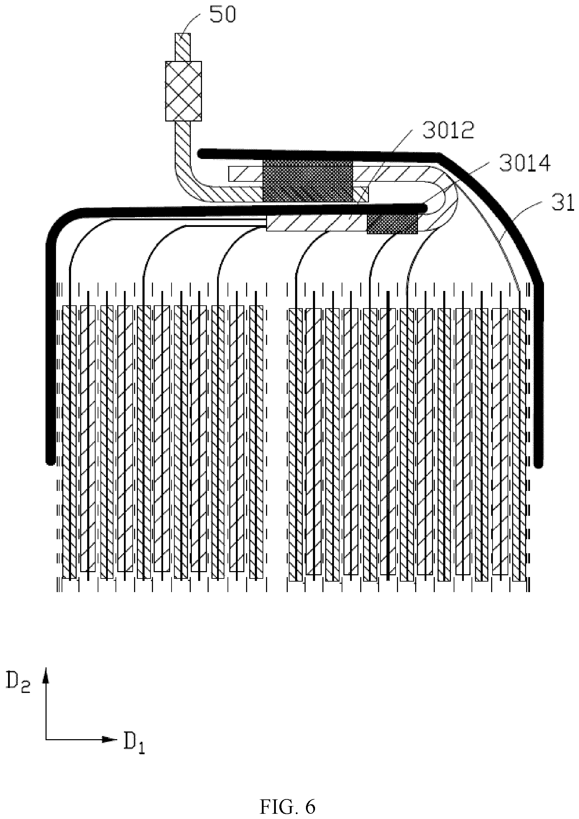

Referring to FIG. 6, in some other embodiments, the M first tabs 31 may be welded together to form a welding region 3014 at the second sub-portion 3012. It can be understood that if the M first tabs 31 are not fixed together at the first connecting portion 301, when the first adapting piece 50 is inserted into the housing 10, the first tabs 31 at the first connecting portion 301 are apt to separate from each other under the action of the first adapting piece 50. In this application, because the M first tabs 31 are fixed at the welding region 3014 of the second sub-portion 3012 by welding, risks may be further reduced that the first connecting portion 301 is inversely inserted because the first tabs 31 (for example, the first tabs 31 on the right side in the first direction D1 in FIG. 6) at the second sub-portion 3012 are separated from each other, further improving safety of the electrochemical apparatus 100. In some embodiments, the welding region 3014 may be disposed at an end of the second sub-portion 3012 close to the third sub-portion 3013.

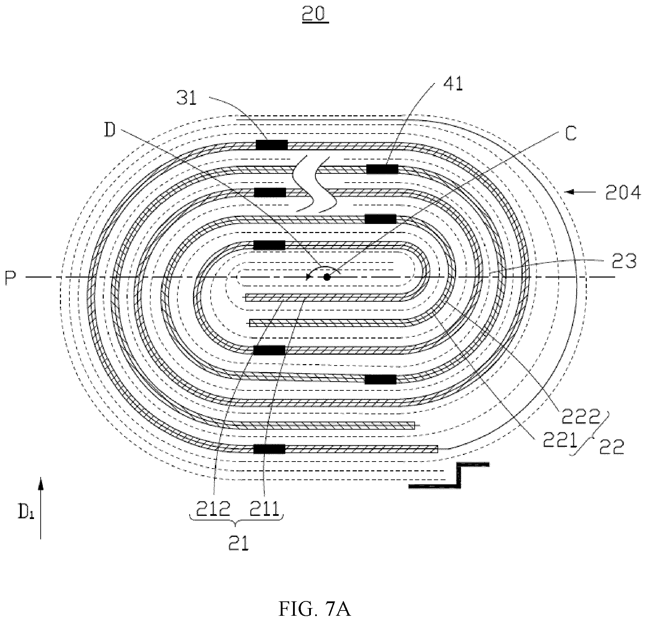

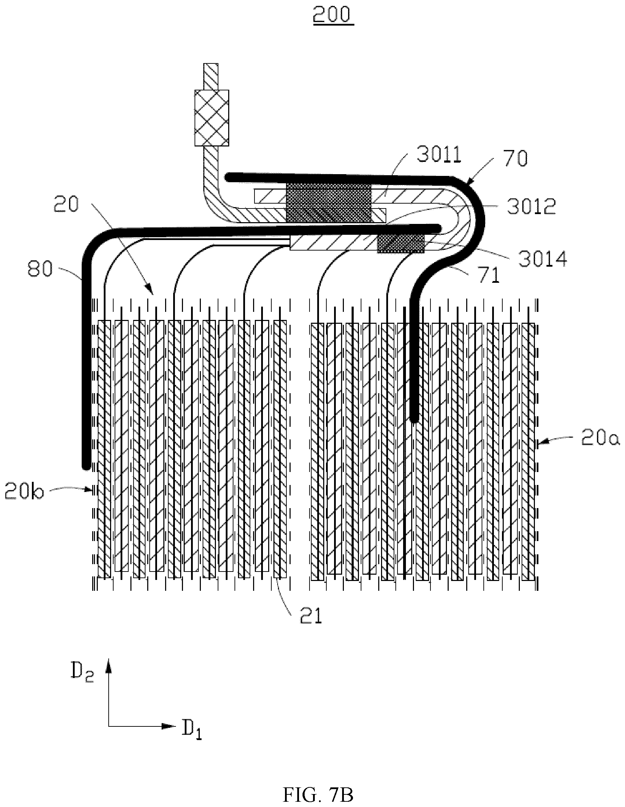

Referring to FIG. 7A and FIG. 7B, another embodiment of this application further provides an electrochemical apparatus 200. The electrochemical apparatus 200 differs from the electrochemical apparatus 100 in that, in the first direction D1, in the N layers of the first electrode plate 21, one outermost layer of the first electrode plate 21 is connected to one of the first tabs 31, and another outermost layer of the first electrode plate 21 is not connected to any of the first tabs 31.

In this case, the first bonding piece 70 is bonded to a side of the first sub-portion 3011 facing opposite to the electrode assembly 20. In the first direction D1, the first bonding piece 70 is also disposed between two adjacent layers of the electrode plate. The second bonding piece 80 is bonded to a side of the second sub-portion 3012 facing opposite to the electrode assembly 20 and to a side surface 20b of the electrode assembly 20 in the first direction D1. In the first direction D1, the second connecting portion 302 is located between the first bonding piece 70 and the second bonding piece 80. In this case, the first bonding piece 70 and the second bonding piece 80 may also reduce risks of short circuit or electrolyte leakage caused by the housing 10 being pierced by burrs of the first connecting portion 301. The first bonding piece 70 includes a bending portion 71, where the bending portion 71 is disposed on a side of the second sub-portion 3012 facing the electrode assembly 20. Therefore, the bending portion 71 also has a limiting function in a second direction D2 on the first connecting portion 301 to further reduce the risk of the contact short circuit caused by the inverse insertion of the first connecting portion 301. In addition, in the first direction D1, the first bonding piece 70 is also disposed between two adjacent layers of the electrode plate, reducing the thickness in the first direction D 1 and increasing energy density.

As shown in FIG. 7B, furthermore, each layer of a first electrode plate 21 disposed between a first bonding piece 70 and a second bonding piece 80 is connected to a first tab 31. In this manner, the number of the first tab 31 may be further increased, increasing a charge-discharge rate of an electrochemical apparatus 100.

In some embodiments, the M first tabs 31 are welded together to form a welding region 3014 at the second sub-portion 3012, so that the risk may be reduced that the first connecting portion 301 is inversely inserted because the first tabs 31 of the second sub-portion 3012 are separated from each other. The bending portion 71 is disposed on a side of the welding region 3014 facing the electrode assembly 20.

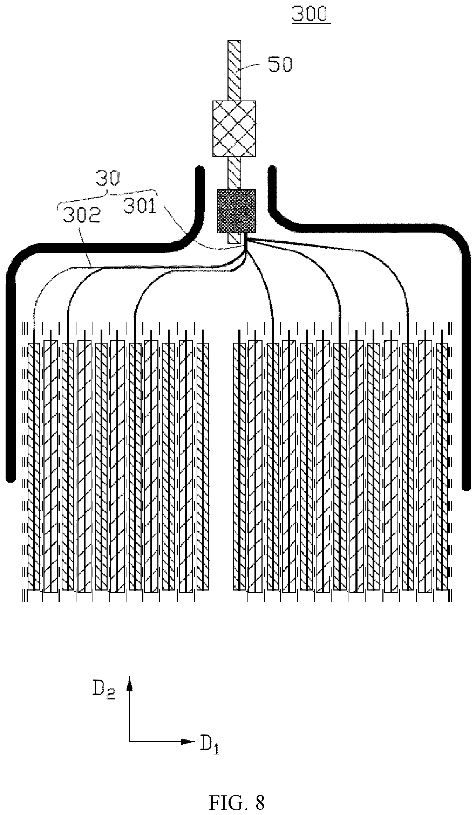

Referring to FIG. 8, yet another embodiment of this application further provides an electrochemical apparatus 300. The electrochemical apparatus 300 differs from the electrochemical apparatus 100 in that the first connecting portion 301 is not a U-shaped structure, but runs in the second direction D2 as a whole. During manufacturing, it is only required to bend the first tab group 30 at a joint between the first connecting portion 301 and a second connecting portion 302, and the first connecting portion 301 itself does not need to be bent, helping simplify the manufacturing process.

The electrochemical apparatus 100, 200, or 300 in this application includes all apparatuses capable of electrochemical reactions. The electrochemical apparatus 100, 200, or 300 includes all kinds of primary batteries, secondary batteries, fuel batteries, solar batteries, and capacitors (for example, super capacitors). Optionally, the electrochemical apparatus 100, 200, or 300 may be a secondary lithium battery, including a secondary lithium metal battery, a secondary lithium-ion battery, a secondary lithium polymer battery, and a secondary lithium-ion polymer battery.

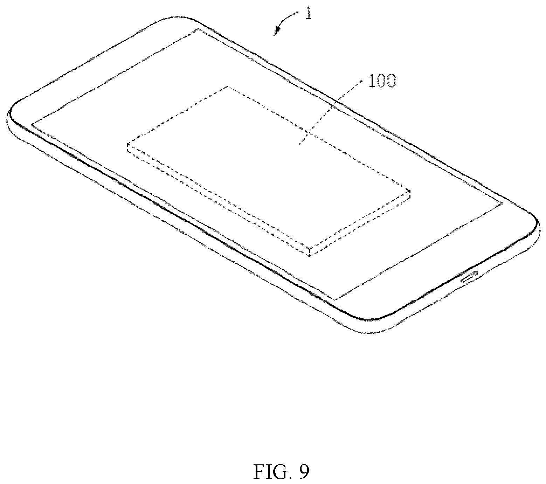

Referring to FIG. 9, an embodiment of this application further provides an electronic apparatus 1. The electronic apparatus 1 includes the electrochemical apparatus 100 (or the electrochemical apparatus 200 or 300). The electrochemical apparatus 100, 200, and 300 of this application are applicable to electronic apparatuses 1 in various fields. In an embodiment, the electronic apparatus 1 of this application may be, but is not limited to, a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc, a transceiver, an electronic notebook, a calculator, a memory card, a portable recorder, a radio, a standby power source, a motor, an automobile, a motorcycle, a motorized bicycle, a bicycle, a lighting appliance, a toy, a game console, a timepiece, an electric tool, a flash lamp, a camera, a large household battery, a lithium-ion capacitor, or the like.

Finally, it should be noted that the foregoing embodiments are merely intended to describe the technical solutions of this application, but not to constitute any limitation. Although this application is described in detail with reference to preferred embodiments, persons of ordinary skill in the art should understand that modifications or equivalent replacements can be made to the technical solutions of this application, without departing from the scope of the technical solutions of this application.

## Claims

1. An electrochemical apparatus, comprising: a housing, an electrode assembly disposed inside the housing, a first tab group, and a first adapting piece electrically connected to the first tab group and extending out from the housing; wherein the electrode assembly is configured to be a winding structure and comprises a first electrode plate, the first tab group comprises M first tabs; **characterized in that**,
a thickness direction of the electrode assembly is defined as a first direction, wherein in the first direction, the electrode assembly comprises N layers of the first electrode plate, N being greater than M, and the M first tabs are each connected to the first electrode plate; a plane passing through a winding center axis of the electrode assembly and perpendicular to the first direction is defined as a winding center plane, wherein in the first direction, the M first tabs are disposed on two sides of the winding center plane; and
the first tab group comprises a first connecting portion connected to the first adapting piece and a second connecting portion connected to the first electrode plate; wherein the M first tabs are stacked to form the first connecting portion, and part of the first tabs at the second connecting portion are connected to a side of the first connecting portion facing the electrode assembly.

2. The electrochemical apparatus according to claim 1, **characterized in that**, in the first direction, layers of the first electrode plate connected to the first tabs and layers of the first electrode plate not connected to any of the first tabs are alternately arranged.

3. The electrochemical apparatus according to claim 1, **characterized in that**, the first connecting portion forms a U-shaped structure, and the first connecting portion comprises a first sub-portion, a second sub-portion, and a third sub-portion; wherein the first sub-portion is connected to the first adapting piece, the second sub-portion is connected to the second connecting portion, the third sub-portion is bent and connected between the first sub-portion and the second sub-portion, and the first adapting piece is at least partly disposed in a space delimited by the U-shaped structure.

4. The electrochemical apparatus according to claim 3, **characterized in that**, in the first direction, in the N layers of the first electrode plate, one outermost layer of the first electrode plate is connected to one of the first tabs, and another outermost layer of the first electrode plate is not connected to any of the first tabs.

5. The electrochemical apparatus according to claim 4, **characterized in that**, the electrochemical apparatus (100, 200, or 300) further comprising:
a first bonding piece bonded to a side of the first sub-portion facing opposite to the electrode assembly; and
a second bonding piece bonded to a side of the second sub-portion facing opposite to the electrode assembly and to a side surface of the electrode assembly in the first direction; and
in the first direction, the first bonding piece is disposed between two adjacent layers of the first electrode plate, and the second connecting portion is located between the first bonding piece and the second bonding piece; wherein the first bonding piece comprises a bending portion disposed on a side of the second sub-portion facing the electrode assembly.

6. The electrochemical apparatus according to claim 5, **characterized in that**, the M first tabs are welded together to form a welding region at the second sub-portion, and the bending portion is disposed on a side of the welding region facing the electrode assembly.

7. The electrochemical apparatus according to claim 5, **characterized in that**, each layer of the first electrode plate disposed between the first bonding piece and the second bonding piece is connected to one of the first tabs.

8. The electrochemical apparatus according to claim 3, **characterized in that**, two outermost layers of the first electrode plate in the N layers of the first electrode plate are each connected to one of the first tabs.

9. The electrochemical apparatus according to claim 8, **characterized in that**, the electrochemical apparatus (100, 200, or 300) further comprising:
a first bonding piece bonded to a side of the first sub-portion facing opposite to the electrode assembly and to a side surface of the electrode assembly in the first direction; and
a second bonding piece bonded to a side of the second sub-portion facing opposite to the electrode assembly and to another side surface of the electrode assembly in the first direction; wherein in the first direction, the second connecting portion is located between the first bonding piece and the second bonding piece.

10. The electrochemical apparatus according to claim 9, **characterized in that**, the M first tabs are welded together to form a welding region at the second sub-portion.

11. The electrochemical apparatus according to claim 5 or 9, **characterized in that**, at least one of the first bonding piece or the second bonding piece is an insulating tape.

12. The electrochemical apparatus according to claim 1, **characterized in that**, the first electrode plate comprises a current collector and an active material layer disposed on a surface of the current collector, wherein the first tab and the current collector are integrally formed.

13. An electronic apparatus, comprising the electrochemical apparatus according to any one of claims 1 to 12.
